# EUROPEAN PATENT APPLICATION

(11) **EP 2 933 528 A1**
(43) Date of publication of application: **21.10.2015**
(21) Application number: 13863648.5
(22) Date of filing: 13.11.2013
(51) Int. Cl.: F16G 1/00, F16G 1/08, F16G 5/00, F16G 5/06, F16G 5/20

(54) **TRANSMISSION BELT**

(30) Priority: 13.12.2012 JP 2012272851
(71) Applicant: Bando Chemical Industries, Ltd., Kobe-shi, Hyogo 650-0047 (JP)
(72) Inventor: OKAMOTO, Toshiro, Kobe-shi Hyogo 650-0047 (JP)
(74) Representative: Chevalier, Renaud Philippe
(86) International application number: PCT/JP2013/006673
(87) International publication number: WO 2014/091673

(57) **Abstract**

A transmission belt is looped over pulleys to transmit torque between the pulleys. The transmission belt includes a metallic soap layer 7 on a face (i) on an inner periphery of the transmission belt, and (ii) in contact with the pulleys. The metallic soap layer 7 includes powdered metallic soap.

## Description

### TECHNICAL FIELD

The present disclosure relates to a transmission belt to be used for an apparatus such as an engine.

### BACKGROUND ART

A typical problem with accessory belts for cars is stick-slip-related abnormal noise and water-related abnormal noise that occur when the belts are wet. To overcome the problem, various improvements have been made on the belts.

However, usage environments for the belts are worsening every year because of (i) requests for greater fuel efficiency that cause a decrease in the belt tension and an increase in engine speed fluctuation, (ii) heavier accessory load due to more electronic parts, and (iii) changes in body designing for securing collision safety.

In order to overcome the worsening usage environments, PATENT DOCUMENT 1 discloses a friction belt. The friction belt tries to reduce abnormal noise by a surfactant, such as powdered soap, applied to the surfaces of the ribs of the friction belt.

### CITATION LIST

### PATENT DOCUMENT

PATENT DOCUMENT 1: Japanese Unexamined Patent Application No. 2001-289284
PATENT DOCUMENT 2: Japanese Unexamined Patent Publication No. 2011-190916
PATENT DOCUMENT 3: Japanese Utility Model Publication No. H04-5547
PATENT DOCUMENT 4: Japanese Unexamined Patent Publication No. 2001-336585

### SUMMARY OF THE INVENTION

### TECHNICAL PROBLEM

However, the applied surfactant disclosed in Japanese Unexamined Patent Publication No. 2001-289284 is hydrophilic. Thus, water on the friction belt would dissolve and wash the surfactant away, and such friction belt could fail to obtain an effect to reduce abnormal noise.

In contrast, a component, which can reduce the abnormal noise, would be contained in rubber forming the ribs. Here, with a worsening environment for the usage of the belt, an increasing amount of such a component is required to sufficiently reduce the abnormal noise. The increase in the amount of the component contained in the rubber noticeably develops flaws of the belt, such as an increase in incidence of cracks on the belt and a decrease in resistance of the belt to wear.

In addition, these flaws cannot be corrected even in the belts each disclosed in one of PATENT DOCUMENTS 2 to 4.

The present disclosure is conceived in view of the above problems and provides a transmission belt that can effectively reduce abnormal noise under wet condition.

### SOLUTION TO THE PROBLEM

A transmission belt according to an aspect of the present disclosure is looped over multiple pulleys to transmit torque between the pulleys. The transmission belt includes a metallic soap layer on a face (i) on an inner periphery of the transmission belt, and (ii) in contact with the pulleys. The metallic soap layer includes powdered metallic soap.

In this structure of the transmission belt, the metallic soap layer including the powdered metallic soap acts as a face in contact with the pulleys. Thus, the use of the transmission belt for a belt accessory-driving apparatus can effectively reduce the production of abnormal noise under wet condition. On the other hand, no change is made to the structure of the belt body except the metallic soap layer. Compared with a case where the metallic soap is contained in the belt body, this structure prevents the life of the belt from reducing, eliminating a risk of decrease in wear resistance of the belt. Moreover, such a structure can easily deal with a change in design of an engine, for example.

### ADVANTAGES OF THE INVENTION

A transmission belt according to the present disclosure can effectively reduce abnormal noise under wet condition.

### BRIEF DESCRIPTION OF THE DRAWINGS

[FIG. 1] FIG. 1 is a perspective view of a V-ribbed belt according to an embodiment of the present disclosure
[FIG. 2] FIG. 2 is an elevation view exemplifying a structure of a belt accessory-driving apparatus with the V-ribbed belt illustrated in FIG. 1.
[FIG. 3] FIG. 3 is a view to illustrate a layout of pulleys of a belt running test machine for evaluation of abnormal noise under wet condition.
[FIG. 4] FIG. 4 is a view to illustrate a layout of pulleys of a belt running test machine for reverse bending test.
[FIG. 5] FIG. 5 is a view to illustrate a layout of pulleys of a belt running test machine for evaluation of resistance to wear.

### DESCRIPTION OF EMBODIMENTS

A transmission belt according to embodiments of the present disclosure will now be described in detail, with reference to the drawings.

### (Embodiments)

### -Structure of V-ribbed Belt and Belt Accessory-Driving Apparatus-

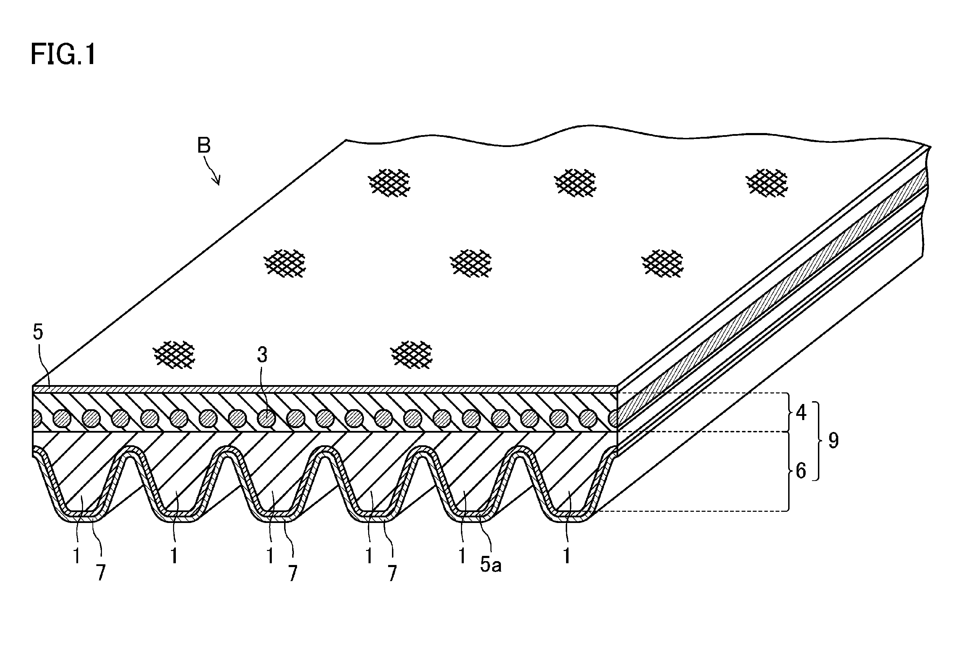

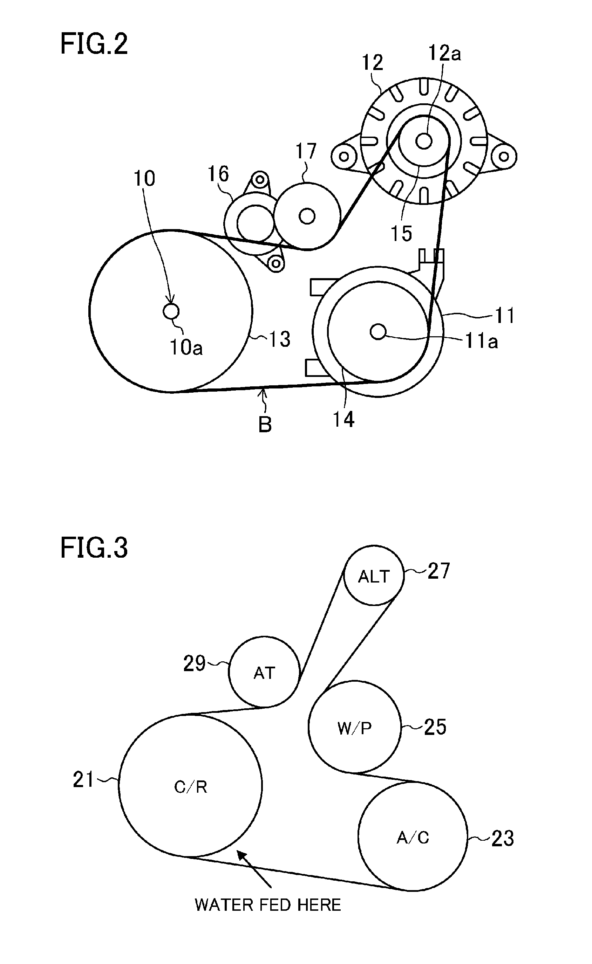

FIG. 1 is a perspective view of a V-ribbed belt according to an embodiment of the present disclosure. FIG. 2 is an elevation view exemplifying a structure of a belt accessory-driving apparatus which uses the V-ribbed belt illustrated in FIG. 1. The V-ribbed belt is now given as an example of the transmission belt.

As illustrated in FIGS. 1 and 2, a V-ribbed belt B according to this embodiment is a transmission belt looped over multiple pulleys to transmit torque between multiple pulleys. The V-ribbed belt B includes a metallic soap layer 7 on a face (i) on an inner periphery of the V-ribbed belt B, and (ii) in contact with the multiple pulleys. The metallic soap layer 7 includes powdered metallic soap. Note that the "metallic soap" is a generic name of metallic salt of long-chain fatty acid other than sodium and potassium.

The V-ribbed belt B according to this embodiment has a belt perimeter ranging from, for example, approximately 700 mm to 3,000 mm, a belt width ranging from, for example, approximately 10 mm to 36 mm, and a belt thickness ranging from, for example, 4.0 mm to 5.0 mm.

The V-ribbed belt B according to this embodiment is an endless belt, and has a belt body 9 including an adhesive rubber layer 4, and a rib rubber layer 6. The adhesive rubber layer 4 is positioned to an outer periphery of the V-ribbed belt B, and the rib rubber layer 6 is positioned to the inner periphery of the V-ribbed belt B. The belt body 9 is provided with a reinforcing fabric 5 on the outer periphery face of the belt body 9.

The adhesive rubber layer 4, which is formed into a belt, is horizontally-long quadrilateral in cross section in the direction of the belt width. Embedded in the adhesive rubber layer 4 is a tensile cord 3. The tensile cord 3, extending in the circumferential direction of the adhesive rubber layer 4, is helical with a predetermined pitch in the belt width direction.

The rib rubber layer 6 has multiple ribs 1 on the inner periphery of the rib rubber layer 6. Each of the ribs 1 extends in the circumferential direction of the rib rubber layer 6, and is substantially V-shaped (actually trapezoidally-shaped) in cross section in the belt width direction. A neighboring pair of the ribs 1 has a groove therebetween, and the groove is V-shaped in cross section in the belt width direction. The inner periphery of the rib rubber layer 6 is covered with a reinforcing fabric 5a and the metallic soap layer 7. Note that the powdered metallic soap is applied to the inner periphery faces of the ribs 1 unless the reinforcing fabric 5a is attached to the inner periphery face of the rib rubber layer 6.

The powdered metallic soap in the metallic soap layer 7 may include at least a selected one of, for example, zinc stearate, calcium stearate, aluminum stearate, or magnesium stearate. Note that the metallic soap layer 7 may be a kind of powder including at least a selected one of, for example, lithium stearate, barium stearate, calcium laurate, barium laurate, zinc laurate, calcium ricinoleate, barium ricinoleate, and zinc ricinoleate. The metallic soap layer 7 may be a mixture of two or more kinds of metallic soap, as well as a single kind of metallic soap.

Note that if the metallic soap is contained in the rib rubber layer 6, no significant effect to reduce abnormal noise can be obtained as described later. In contrast, such mixing causes the rib rubber layer 6 to be low in durability to bend and resistance to wear. Hence, the metallic soap included in the rib rubber layer 6 is preferably 10% or less by weight than the weight of the rubber ingredient for the rib rubber layer 6.

If the metallic soap of greater than or equal to 0.01 g/rib·m is applied, the effect to reduce abnormal noise is successfully achieved. Even though an excessive amount of the metallic soap is applied to the rib rubber layer 6, extra metallic soap falls off by the rotation of the belt. Thus, the metallic soap causes no problem in operating the belt. Note, however, if the amount of the applied metallic soap is significantly excessive, the metallic soap will scatter over other parts, and this is not preferable.

The above adhesive rubber layer 4 is formed to have a thickness ranging from 1.0 mm to 2.5 mm, for example. The adhesive rubber layer 4 is formed of a rubber composition including a material rubber component containing various compounding ingredients. Examples of material rubber components for the rubber composition included in the adhesive rubber layer 4 are ethylene-α-olefin elastomer, such as ethylene propylene rubber (EPR) and ethylene-propylene-diene monomer rubber (EPDM), chloroprene rubber (CR), chlorosulfonated polyethylene rubber (CSM), and hydrogenated nitrile butadiene rubber (H-NBR). Among these material rubber components, the ethylene-α-olefin elastomer is preferable in view of excellent heat and cold resistance. Examples of compounding ingredients include a crosslinker such as sulfur and an organic peroxide, an antioxidant, a processing aid, a plasticizer, a reinforcing material such as carbon black, and a filler. The rubber composition included in the adhesive rubber layer 4 may contain short fibers. Preferably, however, the rubber composition would rather not contain the short fibers in view of adhesiveness to the tensile cord 3. Note that the rubber composition that forms the adhesive rubber layer 4 is made of an uncrosslinked rubber composition which is a material rubber component mixed with compounding ingredients and kneaded together. The uncrosslinked rubber composition is heated, pressurized, and crosslinked by a crosslinker to become the rubber composition.

The above tensile cord 3 includes twisted yarns of polyester fibers, polyethylene naphthalate (PEN) fibers, aramid fibers, vinylon fibers, polyketone fibers, nylon-4,6 fibers, nylon-6,6 fibers, or glass fibers, for example. The core wire 3 has a diameter ranging from 0.5 mm to 1.5 mm, for example.

Each rib 1 has a height ranging from 2.0 mm to 3.0 mm, for example. A width between the base ends of the rib 1 ranges from 1.0 mm to 3.6 mm, for example. Moreover, there are 3 to 10 of the ribs 1, for example.

The rib rubber layer 6 includes a rubber composition made of, for example, a material rubber component containing various compounding ingredients. Examples of material rubber components of the rubber composition included in the rib rubber layer 6 are ethylene-α-olefin elastomer, such as ethylene propylene rubber (EPR) and ethylene-propylene-diene monomer rubber (EPDM), chloroprene rubber (CR), chlorosulfonated polyethylene rubber (CSM), and hydrogenated nitrile butadiene rubber (H-NBR). Among these material rubber components, the ethylene-α-olefin elastomer is preferable in view of excellent heat resistance and cold resistance. Examples of the compounding ingredients include a crosslinker such as sulfur and an organic peroxide, an antioxidant, a processing aid, a plasticizer, a reinforcing material such as carbon black, a filler, and short fibers. Note that the rubber composition included in the rib rubber layer 6 is made of an uncrosslinked rubber composition which is a material rubber component mixed with a compounding ingredient and kneaded together. The uncrosslinked rubber composition is heated, pressurized, and crosslinked by a crosslinker to become the rubber composition.

The reinforcing fabric 5 includes, for example, a fabric material woven from yarns made of cotton, polyamide fibers, polyester fibers, or aramid fibers into a fabric such as a plain-woven twill, or sateen-woven fabric. The reinforcing fabric 5 has a thickness of substantially 0.4 mm, for example. The reinforcing fabric 5 receives an adhesion treatment to acquire an adhesive property to the belt body 9. In the adhesion treatment, the reinforcing fabric 5 is immersed in an aqueous solution of resorcin/formalin/latex (hereinafter referred to as an RFL aqueous solution) and heated before forming processing. Another adhesion treatment is to coat with rubber cement the face facing the belt body 9, and dry the face. Note that, the surface part to the outer periphery of the belt may include a rubber composition, instead of the reinforcing fabric 5. Moreover, the reinforcing fabric 5 may include a knit fabric or a non-woven fabric.

The V-ribbed belt B according to this embodiment is used for a belt accessory-driving apparatus of an automobile engine as illustrated, for example, in FIG. 2.

That is to say, the belt accessory-driving apparatus according to this embodiment transmits the driving force of an engine 10 to a compressor 11 for an air conditioner and an alternator 12 via the V-ribbed belt B. The engine 10 has a crankshaft 10a on which a drive pulley 13 is mounted. The drive pulley 13 rotates together with the crankshaft 10a. The compressor 11 and the alternator 12 have rotation shafts 11a and 12a, respectively. Mounted on the rotation shafts 11a and 12a are respective driven pulleys 14 and 15 each of which rotates together with a corresponding one of the rotation shafts 11a and 12a.

All the driving pulley 13 and the driven pulleys 14 and 15 are V-ribbed pulleys. The V-ribbed belt B is looped over these pulleys. Furthermore, disposed near the engine 10 is a tensioner 16. This tensioner 16 has a tension pulley 17 which presses the back face of the V-ribbed belt B to provide the V-ribbed belt B with predetermined tension.

Such a structure of the belt accessory-driving apparatus allows the driving force generated by the engine 10 to be efficiently transmitted to the compressor 11 and the alternator 12 via the V-ribbed belt B.

### -Effects of the V-ribbed belt-

For the V-ribbed belt B according to this embodiment, the metallic soap layer 7 including the powdered metallic soap acts as a face in contact with the pulleys. Thus, the use of the V-ribbed belt B for a belt accessory-driving apparatus can effectively reduce the production of abnormal noise in driving of the belt. The noise reduction is attributed to the fact that the metallic soap acts as a lubricant between the belt and the pulleys to reduce the friction therebetween, and thus effectively reduces vibrations caused by the rotation of the belt and by the contacts between the pulleys and the belt.

Moreover, the metallic soap is hydrophobic and hard to be washed away under wet condition, compared with a layer including hydrophilic powder such as talc. As a result, the V-ribbed belt B according to this embodiment demonstrates a significant improvement in continuity of an effect to reduce abnormal noise when the belt is wet, compared with the belt disclosed in Japanese Unexamined Patent Publication No. 2001-289284. Consequently, when the V-ribbed belt B according to this embodiment is used for a belt accessory-driving apparatus, production of the abnormal noise is continuously reduced even though the inside of the engine room is wet, for example.

This abnormal noise reduction effect can be achieved no matter what kind of metallic soap the powder included in the metallic soap layer 7 is. Preferably, the metallic soap is one of or a mixture of at least any two of zinc stearate, calcium stearate, aluminum stearate, and magnesium stearate.

In addition, it is considered that the abnormal noise reduction effect could be achieved to some degree when the metallic soap is kneaded into the rib rubber layer. However, when the amount of the metallic soap to be kneaded into the rib rubber layer increases, the inhibition of vulcanization occurs in the rubber and the belt faces a problem of reducing its durability to bend and resistance to wear. Consequently, the problem will shorten the life of the belt and make it difficult for the belt to ensure its long-term reliability.

In contrast, the V-ribbed belt B according to this embodiment can effectively reduce the production of abnormal noise when the V-ribbed belt B is dry or wet, without reducing the bending durability and wear resistance of the belt body 9. Hence, the use of the V-ribbed belt B according to this embodiment can effectively reduce the abnormal noise without shortening the flex life and sacrificing the long-term reliability of the belt. Moreover, the V-ribbed belt B according to this embodiment can achieve the above effects in tough usage environments in recent years.

Note that the effects by the metallic soap layer 7 can be obtained regardless of the structure of the belt body 9. Consequently, even though a flaw such as abnormal noise is found at the end of the development of an engine and thus the design of the V-ribbed belt has to be changed, the abnormal noise in driving can be easily reduced using powdered metallic soap applied to the face on the inner periphery of the belt body without changing the design of the V-ribbed belt.

### -Method for Manufacturing V-ribbed Belt-

First, adhesive rubber ingredients and rib rubber ingredients for forming the adhesive rubber layer 4 and the rib rubber layer 6 are prepared using a known method. Known adhesion treatments are also given to the twisted yarns to be included in the core wire 3, and to the fabric materials to be included in the reinforcing fabrics 5 and 5a. The fabric material is shaped into a cylinder using a known method.

A belt forming apparatus used for forming a V-ribbed belt includes a cylindrical rubber sleeve mold and a cylindrical outer mold which is fitted to the rubber sleeve mold. The rubber sleeve mold is made of, for example, a flexible material as acrylic rubber. Using a method such as sending water vapor of a high temperature from inside the rubber sleeve mold, the rubber sleeve mold can be inflated radially outward and pressed against the cylindrical outer mold. The outer periphery face of the rubber sleeve mold is shaped so that a face to the outer periphery of the V-ribbed belt B is made smooth, for example.

The rubber sleeve mold has an outer diameter ranging from 700 mm to 2,800 mm, a thickness ranging from 8 mm to 20 mm, and a height ranging from 500 mm to 1,000 mm, for example. The cylindrical outer mold is made of metal, for example. The inner periphery face of the cylindrical outer mold is provided with ridges extending in the circumferential direction and arranged in the height direction with a predetermined pitch therebetween. The ridges are approximately triangular in cross-section to form the ribs 1 of the V-ribbed belt B. There are 140 of the ridges arranged in the height direction, for example. The cylindrical outer mold has, for example, an outer diameter ranging from 830 mm to 2,930 mm, an inner diameter (not including the ridges) ranging from 730 mm to 2,830 mm, and a height ranging from 500 mm to 1,000 mm. Each of the ridges has a height ranging from 2.0 mm to 2.5 mm, and a width ranging from 3.5 mm to 3.6 mm.

Materials of the belt are sequentially set to this belt forming apparatus. Once a cylindrical fabric material is fitted to the rubber sleeve mold, a sheeted adhesive rubber ingredient is wrapped over the fabric material. Concurrently, twisted yarns are also wound several times to extend in the circumferential direction. At this point, the twisted yarns are wound to form a helical pattern having pitches in the height direction of the rubber sleeve mold. Next, a sheeted adhesive rubber ingredient is wrapped over the twisted yarns, and furthermore, a sheeted rib rubber ingredient and a cylindrical fabric material are wrapped in the stated order. After that, the cylindrical outer mold is attached outside the belt materials.

Subsequently, with the cylindrical outer mold attached to the rubber sleeve mold, for example, water vapor of a high temperature is sent to the rubber sleeve mold to apply heat and pressure thereto. Thus, the rubber sleeve mold is inflated and pressed against the cylindrical outer mold, and the belt materials are sandwiched between the rubber sleeve mold and the cylindrical outer mold. At this time, the belt materials are in a state of having a temperature ranging from 150°C to 180°C, and receiving a pressure ranging from 0.5 MPa to 1.0 MPa in the outward radial direction. In this state, a crosslinking reaction progresses as the rubber compositions flow, and so does the adhesive response of the twisted yarns and the fabric material to the rubber compositions. Furthermore, the ridges of the cylindrical outer mold form the V-shaped grooves between the ribs 1.

Next, a V-ribbed belt slab is cooled and removed from the belt forming apparatus. After that, the removed V-ribbed belt slab is sliced in rounds each having a width ranging from, for example, substantially 10 mm to 28 mm. Each of the sliced belts is turned over to be inside out.

Subsequently, the belts and powdered metallic soap are put in a bag and stirred together so that the metallic soap is applied to the surface of each belt. After that, the belts are taken out of the bag, and extra metallic soap is shaken off from the belts. Consequently, the V-ribbed belt B according to this embodiment is obtained. Note that, here, it is no problem that the formed V-ribbed belt slab catches the powdered metallic soap on its surface to the ribs.

The description as can be seen is how to manufacture the V-ribbed belt by molding; instead, a belt with no V-shaped grooves may be prepared, and the belt may be carved to have V-shaped grooves. In this case, the metallic soap may be applied after the V-shaped grooves are formed.

Note that the description as can be seen exemplifies the V-ribbed belt. In addition, belts such as V-belts, flat belts, and friction drive belts, can also effectively reduce the abnormal noise in driving, if powdered metallic soap is applied to the faces to the inner periphery of the belt and in contact with the pulleys.

The V-ribbed belt as can be seen is an example of this embodiment, and constituent materials, shapes and sizes of the belt may be modified as the person skilled in the art thinks appropriate unless otherwise departing from the scope of the present disclosure.

### [Examples]

### (V-ribbed Belt)

V-ribbed belts were prepared according to the examples and comparative examples below, and tested for evaluation.

### <Example 1>

### -Preparing Belt Materials-

First, an unvulcanized rubber composition was prepared as an adhesive rubber ingredient for forming an adhesive rubber layer. In the preparation of the unvulcanized rubber composition, the compounding ingredients below were mixed and kneaded together with 100 parts by weight rubber (hereinafter referred to as phr) of EPDM (manufactured by JSR Corporation and the trade name of JSR EP123) used as material rubber: 50 phr of carbon black (manufactured by Asahi Carbon Co., Ltd., and the trade name of Asahi #60), 15 phr of plasticizer (manufactured by Japan Sun Oil Co., Ltd., and the trade name of Sunflex 2280), 8 phr of crosslinker (manufactured by NOF corporation and the trade name of PERCUMYL® D), 3 phr of antioxidant (manufactured by Kawaguchi Chemical Industry Co., Ltd., and the trade name of Antage MB), 6 phr of Zinc oxide (manufactured by Sakai Chemical Industry Co., Ltd., and the trade name of Zinc Oxide No. 2), and 1 phr of stearic acid (manufactured by Kao Corporation and the trade name of Stearic Acid). This unvulcanized rubber composition was processed to be a sheet having a thickness of 0.4 mm, using a roll.

Additionally, an unvulcanized rubber composition was prepared as a rubber ingredient for forming a rib rubber layer. In the preparation of the unvulcanized rubber composition, the compounding ingredients below were mixed and kneaded together with 100 phr of EPDM as material rubber: 55 phr of carbon black, 15 phr of plasticizer, 8 phr of crosslinker, 3 phr of antioxidant, 6 phr of Zinc oxide, 1 phr of stearic acid. This unvulcanized rubber composition was formed into a sheet having a thickness of 1 mm, using a roll.

Yarns made of polyester fibers were prepared as twisted yarns for making tensile cords. These twisted yarns received a treatment in which the yarns were immersed in an RFL aqueous solution, heated, and dried.

A plain-woven fabric made of polyester-and-cotton blended yarns was prepared as a fabric material for making reinforcing fabrics for the outer and inner peripheries of the belt. The fabric material received a treatment in which the material was immersed in an RFL aqueous solution, heated, and dried.

### -Forming V-ribbed Belt-

The fabric material to be used as the reinforcing fabric to the outer periphery, the uncrosslinked rubber ingredient for forming the adhesive rubber layer, and the twisted yarns were wrapped and wound in the stated order over the rubber sleeve mold of the belt forming apparatus. After that, the uncrosslinked rubber ingredient for forming the adhesive rubber layer, the uncrosslinked rubber ingredient for forming the rib rubber layer, and the fabric material to be used as the reinforcing fabric to the inner periphery were wrapped and wound in the stated order over the rubber sleeve mold.

Next, the cylindrical outer mold was fitted to the rubber sleeve mold over the belt materials, and the inside of the belt forming apparatus was hermetically sealed. The belt materials were then pressed against the rubber sleeve mold, and concurrently, the rubber sleeve mold was heated with, for example, hot water vapor. Here, a crosslinking reaction progressed as the rubber compositions flowed. In addition, an adhesive response of the twisted yarns and the fabric material to the rubber compositions progressed. Consequently, a cylindrical belt precursor was obtained.

Next, the belt precursor was removed from the belt forming apparatus, and sliced in rounds each having a width of 14.24 mm (i.e., four ribs). Each of the sliced belts was turned over to be inside out, and a V-ribbed belt was obtained. The V-ribbed belt obtained in the aforementioned steps was defined as Example 1. The belt perimeter was 1,160 mm, the belt thickness was 4.3 mm, and the rib height was 2.0 mm. Next, applied to the obtained belt was powdered zinc stearate (manufactured by Tannan Kagaku Kogyo Co., Ltd., and the trade name of Zinc Stearate N. Same in the after-described comparative examples) of 0.010 g/rib·m.

Note that the belts according to Example 1 and the after-described examples and comparative examples are all V-ribbed belts having a PK profile and conformed to the Japanese Automotive Standards Organization (JASO)E-109-2011.

### <Example 2>

A V-ribbed belt according to Example 2 was made, using a method similar to Example 1. Note, however, that powdered calcium stearate (manufactured by Sakai Chemical Industry Co., Ltd., and the trade name of SC-100) was used instead of the powdered stearic acid zinc.

### <Example 3>

A V-ribbed belt according to Example 3 was made, using a method similar to Example 1. Note, however, that powdered aluminum stearate (manufactured by Tannan Kagaku Kogyo Co., Ltd., and the trade name of aluminum stearate) was used instead of the powdered zinc stearate.

### <Example 4>

A V-ribbed belt according to Example 4 was made, using a method similar to Example 1. Note, however, that powdered magnesium stearate (manufactured by Tannan Kagaku Kogyo Co., Ltd., and the trade name of N.P.1500S) was used instead of the powdered zinc stearate.

### <Comparative Example 1>

A V-ribbed belt according to Comparative Example 1 was made, using a method similar to Example 1. Note, however, that water-soluble powdered soap (including sodium borate as the chief component, manufactured by Borax, and the trade name of Borax, or Borax Decahydrate Na₂B₄O₇ · 10H₂O) was used instead of the powdered zinc stearate.

### <Comparative Example 2>

A V-ribbed belt according to Comparative Example 2 was made, using a method similar to Example 1. Note, however, that powdered talc (manufactured by Takehara Kagagu Kogyo Co., Ltd., and the trade name of T talc) was used instead of the powdered stearic acid zinc.

### <Comparative Example 3>

A V-ribbed belt according to Comparative Example 3 was made, using a method similar to Example 1. Note, however, that silica powder (manufactured by Evonik Degussa Japan Co., Ltd., and the trade name of ULTRASIL® VN3) was used instead of the powdered zinc stearate.

### <Comparative Example 4>

A V-ribbed belt according to Comparative Example 4 was made, using a method similar to Example 1. Note, however, that sheet silicate (i.e., clay, manufactured by Hojun Co., Ltd., and the trade name of BEN-GEL HVP) was used instead of the powdered zinc stearate.

### <Comparative Example 5>

A V-ribbed belt according to Comparative Example 5 was made, using a method similar to Example 1. Note, however, that powdered calcium carbonate (manufactured by Maruo Calcium Co., Ltd., and the trade name of MSK-A) was used instead of the zinc stearate.

### <Comparative Example 6>

A V-ribbed belt according to Comparative Example 6 was made, using a method similar to Example 1. Note, however, that no powder was applied to the completed belt.

### <Comparative Example 7>

A V-ribbed belt according to Comparative Example 7 was made, using a method similar to Example 1. Note, however, that the unvulcanized rubber composition in use prepared as a rubber ingredient for forming the rib rubber layer included, in addition to the compounding ingredients in Example 1, 10 phr of zinc stearate mixed and kneaded together with the 100 phr of material rubber. Furthermore, no powder was applied in forming the belt precursor.

### <Comparative Example 8>

A V-ribbed belt according to Comparative Example 8 was made, using a method similar to Comparative Example 7. Note, however, that the unvulcanized rubber composition in use prepared as a rubber ingredient for forming the rib rubber layer included, in addition to the compounding ingredients in Comparative Example 7, 5 phr of zinc stearate mixed and kneaded together with the 100 phr of material rubber.

### <Comparative Example 9>

A V-ribbed belt according to Comparative Example 9 was made, using a method similar to Comparative Example 7. Note, however, that the unvulcanized rubber composition in use prepared as a rubber ingredient for forming the rib rubber layer included, in addition to the compounding ingredients in Example 7, 15 phr of zinc stearate mixed and kneaded together with the 100 phr of material rubber.

### <Comparative Example 10>

A V-ribbed belt according to Comparative Example 10 was made, using a method similar to Comparative Example 8. Note, however, that the unvulcanized rubber composition in use prepared as a rubber ingredient for forming the rib rubber layer included, in addition to the compounding ingredients in Example 8, 20 phr of zinc stearate mixed and kneaded together with the 100 phr of material rubber.

### (Methods for Tests and Evaluations)

### -Abnormal Noise Tests under Wet Condition-

FIG. 3 is a view to illustrate a layout of pulleys of a belt running test machine for evaluation of abnormal noise under wet condition. The belt running test machine includes an alternator pulley (ALT pulley) 27 positioned to the uppermost section of the belt running test machine, and other pulleys disposed below the ALT pulley 27; namely, the a water pump pulley (W/P pulley) 25, an air compressor pulley (A/C pulley) 23, a crankshaft pulley (C/R pulley) 21, and an auto-tensioner pulley (AT pulley) 29. The AT pulley 29 and the W/P pulley 25 are flat-belt pulleys. The other pulleys are rib-belt pulleys.

The ALT pulley 27 has a diameter of 52.5 mm, the W/P pulley 25 has a diameter of 95 mm, the A/C pulley 23 has a diameter of 110 mm, the C/R pulley has a diameter of 139 mm, and the AT pulley 29 has a diameter of 70 mm.

As illustrated in FIG. 3, a V-ribbed belt to be evaluated was looped to the belt running test machine. Under the condition in which the belt running test machine ran at 750 rpm in idling, the belt tension was 200 N, and loads were placed on the AT pulley 29 and the A/C pulley 23, observed was noise generated when water of 100 ml per feed was given to a rib section, of the V-ribbed belt, at which the belt advanced toward the C/R pulley 21.

Presence or absence of abnormal noise was determined one meter ahead of the belt running test machine by whether the abnormal noise (squeak noise), which had not been observed before feeding of the water, was heard. If no abnormal noise was generated, water was repeatedly fed using the above method until the abnormal noise occurred. This test was conducted at normal temperature. Note that the belt for evaluation was a four-rib belt.

### -Reverse Bending Test-

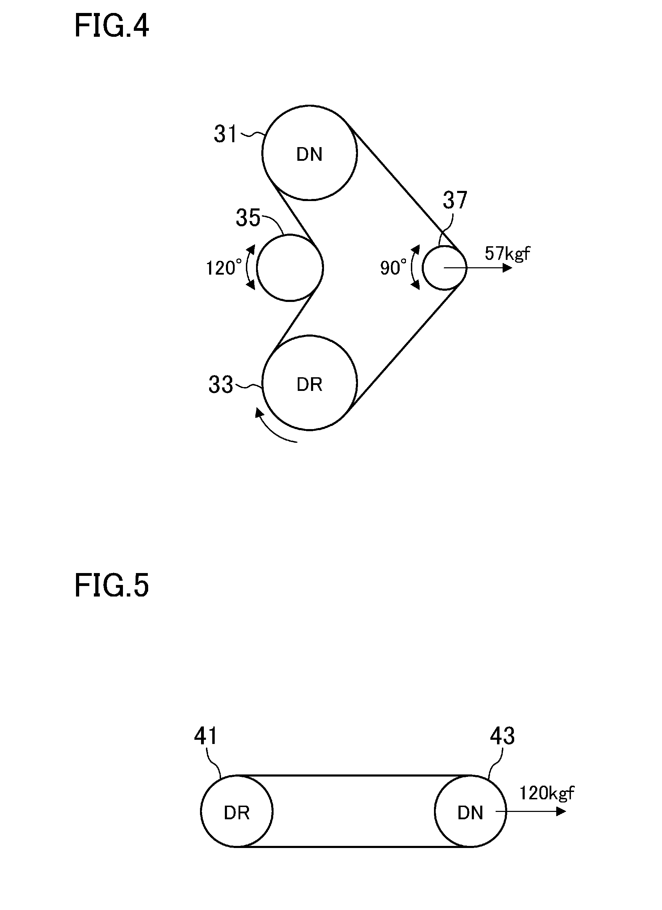

FIG. 4 is a view to illustrate a layout of pulleys of a belt running test machine for reverse bending test. As illustrated in FIG. 4, the belt running test machine includes a driven pulley 31, a driving pulley 33, an idler pulley 35 and a driven pulley 37. The driven pulley 31 and the driving pulley 33 are rib-belt pulleys. The idler pulley 35 (i.e., a flat-belt pulley) and the driven pulley 37 (i.e., a rib-belt pulley) are each disposed between the driven pulley 31 and the driving pulley 33.

The driven pulley 31 and the driving pulley 33 both have a diameter of 120 mm, the idler pulley 35 has a diameter of 85 mm, and the driven pulley 37 has a diameter of 45 mm.

As illustrated in FIG. 4, a V-ribbed belt to be evaluated was looped to the belt running test machine. The V-ribbed belt was run under a condition in which the driving pulley 33 rotated at 4,900 rpm, and a load of 12 PS was placed on the driven pulley 31. An angle of contact between the V-ribbed belt and the idler pulley 35 was 60°, and an angle of contact between the V-ribbed belt and the driven pulley 37 was 90°. While the belt was running, a load of 559 N(= 57 kgf) was placed on the driven pulley 37 toward the right of FIG. 4. Note that this test was conducted under an atmosphere of 120C°. The belt for evaluation was a three-rib belt.

In this test, the V-ribbed belts were run under the above respective conditions, and a running time of each V-ribbed belt was measured between the appearance of a crack on the rib rubber layer and the growth of the crack to the tensile cord.

### -Wear Test-

FIG. 5 is a view to illustrate a layout of pulleys of a belt running test machine for evaluation of resistance to wear. The belt running test machine illustrated in FIG. 5 includes a driving pulley 41 and a driven pulley 43 which are provided with a horizontal interval therebetween. Both the driving pulley 41 and the driven pulley 43 have a diameter of 60 mm. In this test, a V-ribbed belt was looped over the driving pulley 41 and the driven pulley 43 of the belt running test machine so that the rib-side of the belt was in contact with the pulleys 41 and 43.

Each of the V-ribbed belts to be evaluated was weighed and then set to the belt running test machine. A load of 5.2 PS was placed on the driven pulley 43, and a load of 1,177 N (=120 kgf) was placed toward the right of FIG. 5. In this condition under an atmosphere of a room temperature, the driving pulley 41 was run for 24 hours at 3,500 rpm. Note that the belt for evaluation was a three-rib belt.

The belt was weighted again after its run. A percentage was calculated as a wear-out rate by dividing the amount of the weight loss of the belt after its run by the weight of the belt before its run. When the wear-out rate in Comparative Example 7 was shown to be 100, a relative value to the set wear-out rate was determined as a wear resistance index.

### (Results of Test and Evaluation)

Table 1 shows the results of abnormal noise tests of the V-ribbed belts according to Examples 1 to 4 and Comparative Examples 1 to 7 under wet condition.

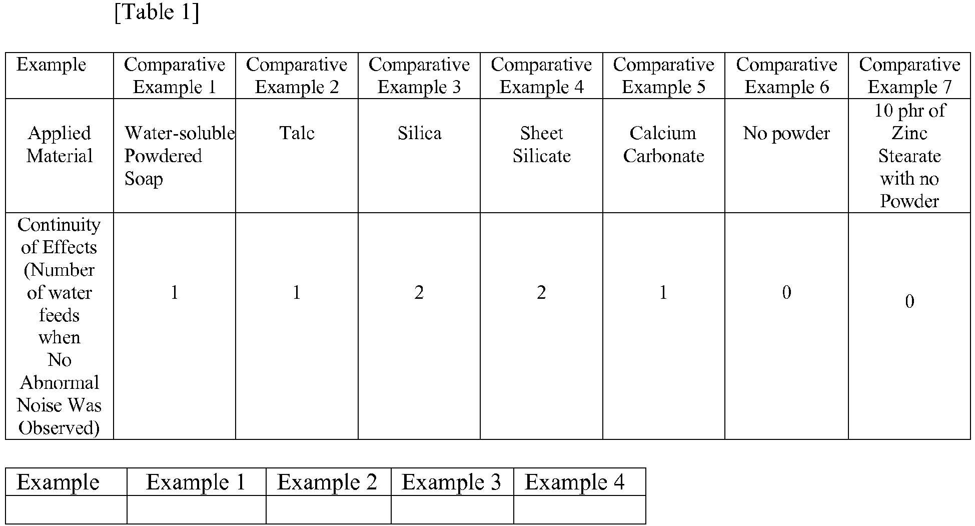

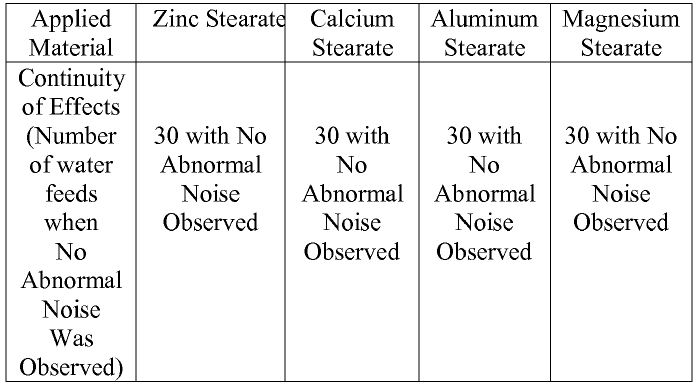

First, the results in Table 1 confirmed that the V-ribbed belts according to Examples 1 to 4 had clearly withstood more water feeds until the abnormal noise occurred than the V-ribbed belt according to Comparative Examples 1 to 5 had. The results also confirmed that the V-ribbed belts coated with hydrophobic powdered stearate maintained their abnormal noise reduction effects under wet condition for a longer period than the V-ribbed belts coated with hydrophilic substances, such as water-soluble powdered soap, talc, silica, clay, and calcium carbonate, did. Note that, as seen in Table 1, the V-ribbed belts with nothing applied to their rib-sides (Examples 6 and 7) already produced the abnormal noise at the beginning of the tests. This shows that the V-ribbed belts produced the abnormal noise when the water washed away the powder applied to the rib-sides. As a result, the reason why the V-ribbed belts according to Examples 1 to 5 maintain their abnormal noise reduction effects is that the powdered zinc stearate is harder to be washed away by water than the other hydrophobic and powdered substances are. Note that the comparison between Examples 6 and 7 shows that mixing the zinc stearate-that is, metallic soap-into the rib rubber layer cannot obtain a sufficient abnormal noise reduction effect.

Moreover, as seen in Table 1, it was confirmed that the use of powdered metallic soap, such as calcium stearate, aluminum stearate, and magnesium stearate, other than the zinc stearate, allowed the abnormal noise reduction effect to last for substantially the same period as when the use of the powdered zinc stearate allowed (see Examples 1 to 4). Hence, hydrophobic fatty acid metal salt-that is, powdered metallic soap-is considered to be able to maintain its abnormal noise reduction effect to a high degree under wet condition, regardless of the kind of the metallic soap. Note that the results shown in Table 1 were able to confirm that the V-ribbed belts, coated with powdered hydrophilic substances, such as water-soluble powdered soap and calcium carbonate, lost their abnormal noise reduction effects after the water was fed once or twice, as the V-ribbed belts coated with powdered talc or silica lost.

Next, Table 2 shows the results of the reverse bending test and the wear test of the V-ribbed belts according to Comparative Examples 6 to 10. Here, the V-ribbed belt according to Example 6-that is, the same as the V-ribbed belts according to Examples 1 to 4 in structure of the belt body but not coated with powder-had a crack lifetime (i.e., a time period for the growth of a crack to the tensile cord) of 298 hours, and a weight change rate of 1.7% after the wear test. Table 2 shows the crack lifetimes and the weight change rates of the V-ribbed belts according to Comparative Examples 6 to 10, when the crack lifetime and the weight change rate of the V-ribbed belt according to Comparative Example 6 were each shown to be 100.

**[Table 2]**

| | Comparative Example 6 | Comparative Example 8 | Comparative Example 7 | Comparative Example 9 | Comparative Example 10 |
|---|---|---|---|---|---|
| Metallic Soap (Zinc Stearate) Amount of Component phr | 0 | 5 | 10 | 15 | 20 |
| Reverse Bending Test Crack Lifetime (0phr Standard Lifetime Index) | 100 | 96 | 93 | 79 | 62 |
| Wear Test Weight Change Rate (0phr Standard Wear Index) | 100 | 105 | 108 | 126 | 149 |

The results shown in Table 2 confirmed that the crack lifetime became shorter with an increasing amount of the zinc stearate to be mixed into the rib rubber layers. Moreover, the results also confirmed that the V-ribbed belts became more susceptible to wear with an increasing amount of the zinc stearate to be mixed into the rib rubber layers. It was further confirmed that the decreases in the crack lifetime and wear resistance became particularly apparent when the amount of the zinc stearate added to the rib rubber layer exceeded 10 phr (i.e., 10% by weight for the rubber ingredient), and that the zinc stearate was not preferable as a means to reduce abnormal noise.

Note that, with the increasing amount of the mixed zinc stearate, the crack lifetime and wear resistance decrease probably because the zinc stearate inhibits the vulcanization of the rubber ingredient. Presumably, the inhibition of the vulcanization similarly occurs when the mixing amount of metallic soap other than the zinc stearate is increased.

On the other hand, the V-ribbed belts according to Examples 1 to 4 are the same in the structures of the belt bodies and reinforcing fabrics *per se* as the V-ribbed belt according to Example 6, and probably have crack lifetime and wear resistance comparable to those of the V-ribbed belt according to Example 6.

Consequently, the test results were able to show that the V-ribbed belts according to this embodiment were confirmed to maintain their abnormal noise reduction effects under wet condition, without causing reductions in their crack lifetimes and wear resistance for a long period of time.

### INDUSTRIAL APPLICABILITY

As can be seen, the transmission belt according to the present disclosure is effective in transmitting the driving power of a car's engine, for example.

### DESCRIPTION OF REFERENCE CHARACTERS

- 1: Rib
- 3: Tensile Cord
- 4: Adhesive Rubber Layer
- 5, 5a: Reinforcing Fabric
- 6: Rib Rubber Layer
- 7: Metallic Soap Layer
- 9: Belt Body
- 10: Engine
- 10a: Crankshaft
- 11: Compressor
- 11a, 12a: Rotation Shaft
- 12: Alternator
- 13, 33, 41: Driving Pulley
- 14, 15, 31, 37, 43: Driven Pulley
- 16: Tensioner
- 17: Tension Pulley
- 21: Crankshaft Pulley
- 23: Air Compressor Pulley
- 25: Water Pump Pulley
- 27: Alternator Pulley
- 29: Auto-tensioner Pulley
- 35: Idler Pulley

## Claims

1. A transmission belt looped over a plurality of pulleys to transmit torque between the plurality of pulleys, the transmission belt comprising
a metallic soap layer on a face (i) on an inner periphery of the transmission belt, and (ii) in contact with the plurality of pulleys, the metallic soap layer including powdered metallic soap.

2. The transmission belt of claim 1, further comprising
a rib rubber layer to the inner periphery, the rib rubber layer having a surface covered with the metallic soap layer, and including a plurality of ribs each V-shaped in cross section and extending in a circumferential direction,
the transmission belt being an endless belt.

3. The transmission belt of claim 1 or claim 2, wherein
the powdered metallic soap includes at least a selected one of zinc stearate, calcium stearate, aluminum stearate, or magnesium stearate.
